Europäisches Patentamt

European Patent Office

Office européen des brevets

(11) Veröffentlichungsnummer: **0 271 724**
**A2**

(12) **EUROPÄISCHE PATENTANMELDUNG**

(21) Anmeldenummer: 87116834.0

(51) Int. Cl.⁴: **G01N 27/00**

(22) Anmeldetag: 14.11.87

(30) Priorität: 20.11.86 DE 3639695

(43) Veröffentlichungstag der Anmeldung:
22.06.88 Patentblatt 88/25

(84) Benannte Vertragsstaaten:
AT BE CH DE FR GB IT LI LU NL SE

(71) Anmelder: **Heusquin, Guy**
**19 Rodgy Thier**
**B-4500 Liège-Jupille(BE)**

Anmelder: **Heusquin, Anke**
**19 Rodgy Thier**
**B-4500 Liège-Jupille(BE)**

(72) Erfinder: **Heusquin, Guy**
**19 Rodgy Thier**
**B-4500 Liège-Jupille(BE)**
Erfinder: **Heusquin, Anke**
**19 Rodgy Thier**
**B-4500 Liège-Jupille(BE)**

(74) Vertreter: **Patentanwälte Kohler - Schwindling**
**- Späth**
**Hohentwielstrasse 41**
**D-7000 Stuttgart 1(DE)**

(54) **Gerät zur Anzeige von bei einer Hydro-Kultur interessierenden Werten.**

(57) Ein Gerät zur Anzeige von bei einer Hydrokultur interessierenden Werten ist dadurch gekennzeichnet, daß das Gerät an seinem unteren Ende einen auf Flüssigkeit ansprechenden Sensor (4, 14), einen mit diesen verbundenen, eine elektronische Schaltung enthaltenden IC (Elektronik 12) und einen an diese Elektronik galvanisch oder drahtlos angeschlossenen optischen oder akustischen Zeichengeber (15) aufweist. Dadurch ist es möglich, die Abwesenheit von Flüssigkeit zuverlässig anzuzeigen und die Anzeige bequem abzulesen.

Fig. 1

## Gerät zur Anzeige von bei einer Hydro-Kultur interessierenden Werten

Die Erfindung bezieht sich auf ein Gerät zur Anzeige von Meßwerten, die bei Hydro-Kulturen in und/oder in der Umgebung eines zur Aufzucht von Pflanzen geeigneten Behälters auftreten, der für die Durchführung von Hydro-Kulturverfahren geeignete poröse Körper enthält.

Bekannte Geräte dieser Art sind rohrförmig ausgebildet, an ihrem unteren Ende offen und weisen einen Schwimmer auf, der durch die Flüssigkeit im Behälter angehoben wird, so daß an der Höhe des Schwimmers die Höhe des Flüssigkeitsspiegels der Nährflüssigkeit im Behälter abgelesen werden kann.

Diese bekannte Geräte dienen nur als Wasserstandsanzeiger. Sie zeigen bereits eine Abwesenheit von Flüssigkeit im Behälter an, wenn noch eine gewisse Restmenge von Flüssigkeit im Behälter vorhanden ist. Dies ist unerwünscht, weil die Pflanzen am besten gedeihen, wenn die Nährflüssigkeit aufsaugenden porösen Körper periodisch trocken gelegt werden. Auch verschmutzen diese Wasserstandsanzeiger oft, so daß die Höhe des Schwimmers nicht mehr genau abgelesen werden kann.

Der Erfindung liegt daher die Aufgabe zugrunde, die geschilderten Nachteile zu beseitigen und ein Gerät zu entwickeln, das die Abwesenheit von Flüssigkeit im Behälter zuverlässig anzeigt, das leicht zu handhaben ist und dessen Anzeige bequem abzulesen ist.

Diese Aufgabe wird gemäß der Erfindung dadurch gelöst, daß das Gerät an seinem unteren Ende einen auf Flüssigkeit ansprechenden Sensor, einen mit diesen verbundenen, eine elektronische Schaltung enthaltenden IC (Elektronik 12) und einen an diese Elektronik galvanisch oder drahtlos angeschlossenen optischen oder akustischen Zeichengeber (15) aufweist.

Diese Erfindung hat den Vorteil, daß bei bis an den Boden des Behälters reichendem Gerätegehäuse der Sensor erst dann anspricht, wenn tatsächlich keine Restflüssigkeit mehr im Behälter ist und daß mit Hilfe der Elektronik die Anzeige an einen beliebigen Ort übertragen werden kann, an dem die Anzeige bequem abgelesen werden kann. Bei einer Ausführungsform der Erfindung erfolgt die Anzeige an einem oben aus dem Behälter oder aus den im Behälter eingefüllten porösen Körper herausragenden Teil des Gehäuses oder aber an einem vom Gerät und Behälter entfernten Ort. Ein weiterer Vorteil der Erfindung liegt in der Verwendung der Elektronik, die bei entsprechender Auswahl nicht nur bei Anwesenheit oder Abwesenheit von Flüssigkeit im Behälter ein entsprechendes Signal abzugeben im Stande ist, sondern auch andere Funktionen übernehmen kann und zu entsprechenden, an Anzeigevorrichtungen zu übertragende Signale umwandeln kann.

Bei Ausführungsformen der Erfindung kann der Sensor zwei am unteren Ende des Gehäuses angeordnete Elektroden aufweisen, die auch durch einen leitenden Abschnitt des Gehäuses einerseits und eine von diesem Abschnitt isolierte Elektrode andererseits bestehen können. Eine solche Elektrodenanordnung ist sehr robust und auch einfach herzustellen. Sie kann nicht nur bei einer Ausführungsform der Erfindung verwirklicht sein, bei der die Elektronik ein Signal abgibt, wenn der elektrische Widerstand zwischen den Elektroden der Abwesenheit von Flüssigkeit im Behälter entspricht, der Widerstand also außerordentlich hoch ist. Diese Elektrodenanordnung kann bei einer Ausführungsform der Erfindung auch dazu verwendet werden, daß die Elektronik bei einem einstellbaren Widerstandswert zwischen den Elektroden ein Signal abgibt, das dann einen bestimmten pH-Wert der Flüssigkeit entspricht, so daß das Gerät einen Sensor für den pH-Wert der Flüssigkeit aufweist. Ein auf den pH-Wert an sprechender Sensor kann auch anders ausgebildet sein als bei der oben beschriebenen Ausführungsform mit zwei räumlich getrennten Elektroden z.B. eine sogenannte Alkali-Elektrode aufweisen. Bei Ausführungsformen der Erfindung kann der Sensor für den pH-Wert auch mit einem den pH-Wert ständig anzeigenden Gerät verbunden sein, bei Verwendung von zwei Elektroden als Sensor für den pH-Wert können die Elektroden mit einer den elektrischen Widerstand zwischen den Elektroden anzeigenden Vorrichtung verbunden sein, auf deren Skala die pH-Werte unmittelbar ablesbar sind.

Das Gerät kann an der Wand des Behälters befestigt oder in die Behälterwand eingebaut sein, es kann aber auch als besonderes Gerät ausgebildet sein, das in den Behälter eingesteckt werden kann wie die bekannten Geräte, die lediglich mit Hilfe eines Schwimmers den Wasserstand anzeigen.

Bei der letztgenannten Ausführungsform kann das Gerät, wie bekannt, etwa rohrförmig ausgebildet sein und an seinem unteren Ende den auf Flüssigkeit ansprechenden Sensor aufweisen. In einem Abstand von seinem unteren Ende ist jedoch ein zusätzlicher, auf Flüssigkeit ansprechender Sensor angeordnet, der ein Signal abgibt, beispielsweise an einen Summer oder dgl., wenn der Flüssigkeitsspiegel die Höhe dieses Sensors erreicht hat. Dadurch kann beim Einfüllen von Flüssigkeit, z.B. Nährflüssigkeit in den Behälter eine bestimmte Flüssigkeitshöhe eingehalten werden.

Bei Ausführungsformen der Erfindung kann das Gerät einen Thermometer für die Temperatur der Flüssigkeit im Behälter und/oder die Temperatur in der Umgebung des Behälters aufweisen. Der Thermometer kann entweder unmittelbar am Gerät abgelesen werden oder aber kann der Thermometer an die Elektronik Signale abgeben, die durch die Elektronik an eine Anzeigevorrichtung weitergegeben werden, beispielsweise an eine schreibende Anzeigevorrichtung oder aber an eine Vorrichtung, die bei Erreichen einer bestimmten Temperatur ein optisches oder akustisches Signal abgibt.

Diese Ausführungsform kann dahingehend ausgebildet sein, daß die Elektronik einen Anschluß für eine Steuerleitung für eine Heizung aufweist, die durch Signale der Elektronik steuerbar ist. Auf diese Weise kann sowohl die Temperatur der Flüssigkeit im Behälter als auch die Temperatur in der Umgebung der Pflanzen gesteuert sein.

Bei Ausführungsformen der Erfindung kann das Gerät von Batterien oder anderen Energiequellen gespeist sein. Vorzugsweise sind die Batterien, die zur Stromversorgung der im Gerät enthaltenen Einrichtungen erforderlich sind, im Gerät selbst untergebracht. Zur Speisung der Batterien können auch Solarzellen vorgesehen sein.

Bei Ausführungsformen der Erfindung kann das Gerät an einem Ende, das aus dem poröse Kugeln enthaltenden Inhalt des Behälters herausragt, ein mit der Elektronik verbundenes Lämpchen vorgesehen sein, das beispielsweise Blinksignale abgibt, wenn keine Flüssigkeit mehr in dem Behälter ist. Anstelle eines Lämpchens kann auch ein Summer vorgesehen sein. Diese Signalgeber werden unmittelbar von der Elektronik gesteuert.

Ausführungsformen der Erfindung weisen einen lichtempfindlichen Sensor und eine Vorrichtung auf, die den gemittelten Wert der eingefallenen Lichtmenge, z.B. der vergangenen 12 oder 24 Stunden, anzeigt. Dadurch kann erkannt werden, ob die Lichtverhältnisse für die Pflanze optimal sind oder ob beispielsweise zusätzlich eine Leuchte eingeschaltet werden muß, die die Pflanze bestrahlt. Selbstverständlich kann das Einschalten einer Leuchte ebenfalls durch die Elektronik gesteuert erfolgen, wenn die eingefallene Lichtmenge, über eine gewisse Zeitspanne gemittelt, unter einem bestimmten Wert liegt.

Das erfindungsgemäße Gerät kann die erforderlichen Anzeigevorrichtungen selbst aufweisen, die Anzeigevorrichtungen für die vom Gerät ermittelten Werte können aber auch räumlich entfernt von dem Gerät angeordnet sein, wobei die Anzeigevorrichtungen entweder elektrisch leitend oder aber drahtlos mit dem Gerät verbunden sind. Das Gerät eignet sich besonders für Hydro-Kultur-Anlagen, die viele Behälter mit Pflanzen aufweisen, wobei das Gerät entweder direkt in den Behälter eingebaut ist oder aber das Gerät rohrförmig ausgebildet ist und in den Behälter eingesteckt ist. Die Meßwerte werden dann vorzugsweise an eine Anzeigetafel gegeben, auf der diese Werte dem einzelnen Behälter zugeordnet angezeigt werden, so daß jederzeit übersehen werden kann, welcher Behälter der Hydro-Kultur-Anlage oder welcher Blumenständer eine Pflege verlangt. Wenn die Hydro-Kultur-Anlage mehrere Behälter aufweist, so kann das Gerät auch lediglich die Sensoren für die zu ermittelnden Meßwerte und Übertragungseinrichtungen aufweisen, die diese Meßwerte an eine zentrale Elektronik geben, die diese Werte dann verarbeitet.

Bei einer Ausführungsform der Erfindung weist das Gerät ein abwärts gerichtetes Rohr auf, an dessen oberem Ende ein Gefäß angeordnet ist, dessen Mittelebene rechtwinklig zu der Achse des Rohres steht. Diese Ausführungform kann zweckmäßig so ausgebildet sein, daß sich in dem Gefäß die Batterien und/oder die Elektronik und/oder der Signalgeber befindet. Dies hat den Vorteil, daß das abwärtsgerichtete Rohr, das die Sonde aufweist, einen verhältnismäßig kleinen Durchmesser haben kann, da die Batterien in diesem Rohr nicht untergebracht sein müssen. Außerdem hat diese Ausführungsform den Vorteil, daß, wenn infolge zu starker Wasserzufuhr oder einer Undichtigkeit sich das Rohr mit Wasser füllt, hierdurch keine für das Funktionieren des Gerätes notwendigen Teile, wie beispielsweise Batterie oder dergleichen, in Mitleidenschaft gezogen werden, die gegen Feuchtigkeit empfindlich sind.

In dem Rohr kann sich eine bis zu seinem unteren Ende reichende Sonde befinden, die beispielsweise aus Fieberglas vorgesehen sein kann, die die elektrischen Leiter trägt, die zu dem Sensor führen. Zweckmäßig ist das Rohr außermittig an das Gefäß angeschlossen, so daß dieses, wenn das Rohr am Rand des Behälters angeordnet wird, der die Hydrokultur aufnimmt, das flache Gefäß entweder möglichst weit über den Rand des Behälters hinaussteht oder aber, in einer anderen Stellung, möglichst wenig oder gar nicht über den Rand des Behälters hinausragt.

Bei einer Weiterbildung der Ausführungsform der Erfindung mit einem am oberen Ende des Rohres angeordneten Gefäß kann die Elektronik auf einer Leiste angeordnet sein, die in dem Gefäß herausnehmbar befestigt ist. An der Leiste kann die Sonde befestigt sein, die dann zusammen mit der die Elektronik tragenden Leiste aus dem Gefäß herausnehmbar ist. Bei einer Ausführungsform der Erfindung ist das flache Gefäß auf dem unten mit Aussparungen versehenen Rohr abnehmbar aufgesteckt. Dadurch läßt sich Rohr und Gefäß preisgünstig herstellen.

Bei einer Weiterbildung der Ausführung mit einem am oberen Ende des Rohres angeordneten Gefäß besteht dieses aus einem schalenförmigen Boden und einem schalenförmigen Deckel, Boden und Deckel können daher jeweils eine vom Boden bzw. Deckel bordartig abstehende Wandleiste aufweisen. Boden und Deckel werden an diesen Randleisten aufeinandergesteckt und haften entweder durch Reibung aufeinander oder aber sind Boden und Deckel an diesen Randleisten noch miteinander formschlüssig verbunden. Auch können Boden und Deckel durch eine Rastvorrichtung miteinander verbunden sein. Das Gefäß kann bei Ausführungsformen der Erfindung flach sein und eine runde Form aufweisen.

Bei Ausführungsformen der Erfindung kann der Deckel des Gefäßes Öffnungen aufweisen, durch die Leuchtdioden hindurchtreten, die den Zustand der interessierenden Werte anzeigen, beispielsweise kann eine grüne Diode den erwünschten Wasserspiegel in dem die Hydrokultur aufnehmenden Behälter anzeigen, wogegen eine rote Leuchtdiode leuchtet, wenn die Höhe des gewünschten Wasserspiegels entweder unter-oder überschritten ist. Die Leuchtdioden können zweckmäßigerweise auf der Leiste befestigt sein, die die Elektronik trägt, so daß Zusammenbau und Reparatur des Gerätes außerordentlich einfach zu bewerkstelligen sind, da die optischen Signalgeber nicht an dem Deckel befestigt sind.

Bei einer Ausführungsform der Erfindung weist der Deckel eine Öffnung auf, durch die der akustische Signalgeber nach oben ragt. Dies hat den Vorteil, daß das akustische Signal wesentlich besser hörbar ist als wenn der Signalgeber in dem Innenraum des Gefäßes nach außen abgedichtet angeordnet wäre. Die Öffnung, durch die der Signalgeber nach oben ragt, kann durch eine Haube abgedichtet sein, die dann Öffnungen zum Durchtritt des Schalters nach außen aufweist. Damit bei unachtsamen Gießen kein Wasser in das Gefäß eintritt, weist die die Öffnung im Deckel abdeckende Haube nach oben abgedeckte Kanäle auf, deren Abdeckung den Zutritt des Wassers zu diesen Kanälen verhindert, die aber einen solchen Abstand von den oberen Enden der Kanäle aufweist, daß der durch die Kanäle nach oben tretende Schall sich nach außen ausbreiten kann. Eine derartige Haube kann bei Ausführungsformen der Erfindung dadurch gebildet sein, daß sich an den Rand der Öffnung ein Rohrabschnitt anschließt, der oben durch einen Stopfen verschließbar ist, wodurch der Stopfen wiederum den oberen Rand des Rohrabschnittes mit Abstand übergreift derart, daß eine Schallverbindung zwischen dem Inneren des Gefäßes und dem Außenraum besteht.

Weitere Merkmale der Erfindung ergeben sich aus der folgenden Beschreibung einer Ausführungsform der Erfindung in Verbindung mit den Ansprüchen und der Zeichnung. Die einzelnen Merkmale können je einzeln für sich oder zu mehreren bei Ausführungsformen der Erfindung verwirklicht sein.

In der Zeichnung sind Ausführungsformen der Erfindung dargestellt.

Fig. 1 zeigt einen Längsschnitt durch eine Ausführungsform der Erfindung.

Fig. 2 zeigt einen Längsschnitt durch eine andere Ausfführungsform der Erfindung;

Fig. 3 zeigt das Innere des Gefäßes bei weggebrochenen Gefäßwänden und an einer Leiste befestigte Sonde ohne Rohr in einer Ansicht nach dem Pfeil III in Fig. 2;

Fig. 4 zeigt eine Draufsicht auf das Gefäß ohne Abdeckung;

Fig. 5 zeigt in vergrößertem Maßstab eine haubenartige Abdeckung einer Öffnung im Deckel des Gefäßes und

Fig. 6 einen Schnitt nach der Linie VI-VI der Fig. 5.

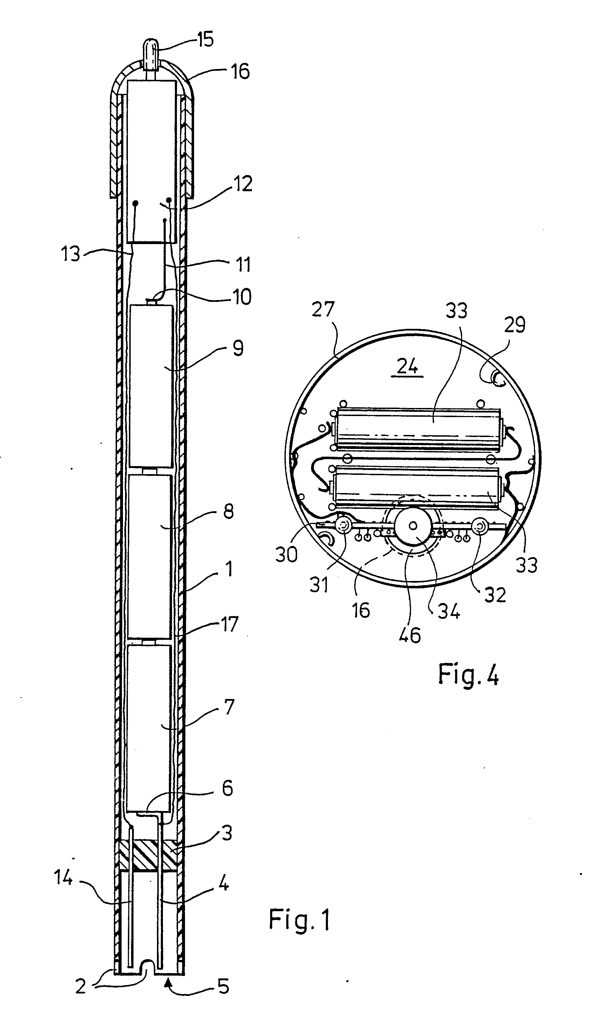

Bei der in Fig. 1 dargestellten Ausführungsform der Erfindung weist ein rohrförmiges Gehäuse 1 aus einem Kunststoff, beispielsweise PVC, das ca. 25 cm lang sein kann und einen Durchmesser von etwa 2 cm haben kann, an seinem unteren, offenen Ende in den unteren Rand der Gehäusewand eingeschnittene Aussparungen 2 auf. In einem Abstand vom unteren Ende, der etwa 2 cm betragen kann, ist eine Dichtung 3 eingesetzt, die aus einem elastischen Schaumstoff-Stopfen bestehen kann, beispielsweise aus einem Kunststoff auf der Basis von Silikonen. Durch diese Dichtung 3 ist eine Elektrode 4 hindurchgeführt, die etwa in einem Abstand von 2 mm von der Ebene des unteren Randes 5 des Gehäuses 1 endet und an ihrem oberen Ende etwa rechtwinklig abgebogen ist, wobei dieses abgebogene Teil 6 blattförmig ausgebildet ist und elastisch federt. Auf dem oberen Teil 6 der Elektrode 4 stützt sich eine Stabbatterie 7 auf, deren Durchmesser etwas kleiner ist als die lichte Weite des rohrförmigen Gehäuses 1. An die Stabbatterie 7 schließt sich eine Stabbatterie 8 und an diese eine Stabbatterie 9 an. Die drei Batterien 7, 8 und 9 sind in Reihe geschaltet. Das obere Ende (Pluspol) der Stabbatterie 9 liegt am unteren Ende 10 einer Elektrode 11 an, die auf einer Leiterplatte 12 befestigt ist. Diese Leiterplatte 12 enthält integrierte Schaltkreise (IC) einer elektronischen Schaltung, die hier kurz als "Elektronik" bezeichnet wird, wobei diese Schaltung so ausgeführt ist, daß sie die Funktionen ausführen kann, die erforderlich sind, um die vorstehend beschriebenen Wirkungen zu erzielen. Von dieser Elektronik 12 führt eine Leitung 13 zu einer ebenfalls in dem Dichtungspfropfen 3 befestigten Elektrode 14, deren unteres Ende ebenfalls bis nahezu an die durch den unteren Gehäuserand 5 gebildete Ebene reicht. Die Elektroden 4 und 14 bilden eine flüssigkeitsempfindlichen Sensor. Tauchen die beiden Elektroden 4 und 14 in eine wässrige Flüssigkeit ein, also beispielsweise in die bei Hydrokulturen verwendete Nährlösung, so ist der Widerstand zwischen diesen beiden Elektroden 4 und 14 verhältnismäßig niedrig. Bei Abwesenheit einer Flüssigkeit ist der Widerstand zwischen diesen Elektroden 4 und 14 jedoch extrem hoch. In diesem Falle gibt die Elektronik 12 Signale an ein Lämpchen 15 ab, das dann intermittierend aufleuchtet und das in einer Kappe 16 befestigt ist, die auf dem oberen Ende des rohrförmigen Gehäuses 1 befestigt ist.

Das ganze Gerät wird in einen Behälter eingesteckt, der die für die Hydrokultur im allgemeinen verwendeten porösen Körper und die darin wachsende Pflanze sowie die Nährlösung enthält. Das Gerät wird so weit in den Behälter eingeführt, daß der untere Rand 5 des Gerätes auf dem Behälterboden aufsteht. Befindet sich keine Nährlösung mehr in dem Behälter, so befindet sich auch keine Flüssigkeit mehr zwischen den Elektroden 4 und 14, so daß der Widerstand zwischen diesen Elektroden sehr groß wird und das Lämpchen 15 intermittierend aufleuchtet. Die Elektroden 4 und 14 können sich bei Ausführungsformen der Erfindung auch bis in die Ebene des unteren Randes 5 erstrecken und sogar noch um Bruchteile von mm darüberhinaus. Je näher sich die unteren Enden der Elektroden 4 und 14 am Behälterboden befinden, desto weniger Restflüssigkeit befindet sich im Behälter, wenn das Lämpchen 15 das optische Signal zur Aufforderung zum Einfüllen von Nährlösung abgibt.

Der Minuspol der Batterie ist durch eine Leitung 17 mit der Elektronik 12 verbunden.

Das Gerät kann in verschiedenen Größen und Höhen hergestellt sein, es kann etwa bündig mit dem Rand des die Hydro-Kultur aufnehmenden Behälters abschließen, wenn sein unteres Ende auf dem Behälterboden aufsteht.

Andere Ausführungsformen der Geräte können unter Verwirklichung vorerwähnter Merkmale auch für Aquarien konstruiert werden.

Es kann eine Schaltung vorgesehen sein, die das akustische Signal bei Nacht unterdrückt.

Das Gerät kann auch bei in Erde kultivierten Pflanzen verwendet werden.

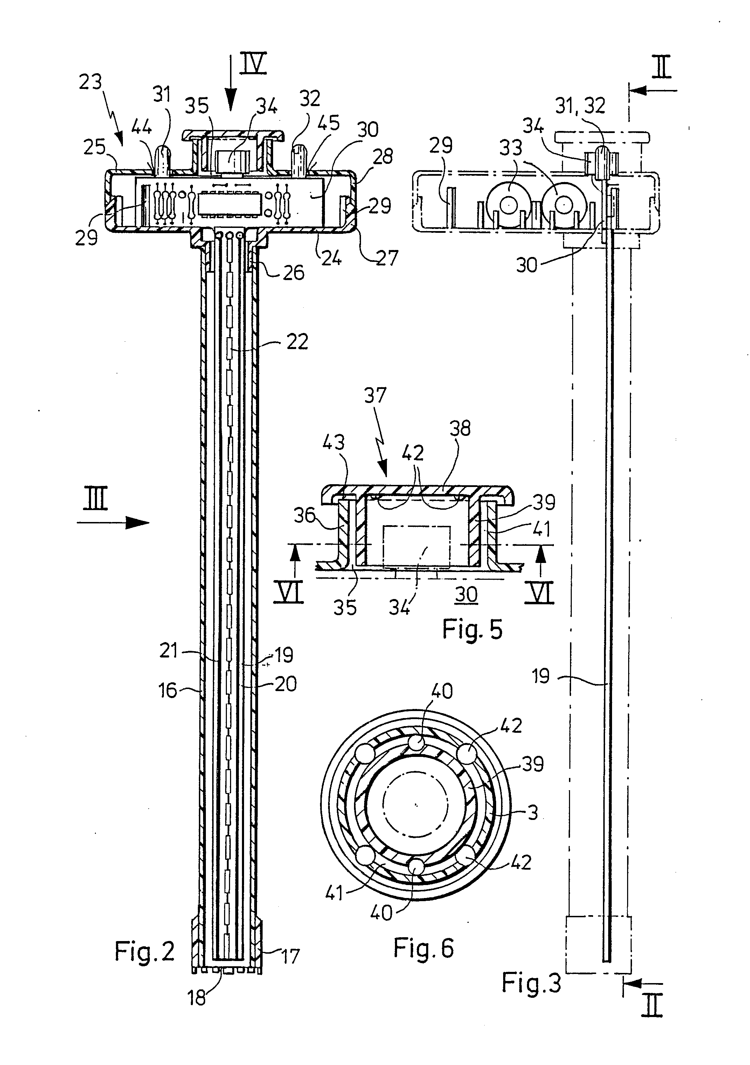

Bei der in den Fig. 2 bis 6 dargestellten Ausführungsform der Erfindung weist ein dem Rohr 1 entsprechendes Rohr 16 an seinem unteren Ende eine auf dem Rohrende befestigte Hülse 17 auf, die auf ihrer Stirnseite Aussparungen 18 zum Durchtritt der Flüssigkeit aufweist. Im Innern des Rohres 16 befindet sich ein flacher Stab 19 aus Fiberglas, der an seiner Oberfläche zwei elektrische Leiter 20 und 21 aufweist, zwischen denen im Abstand zwischen diesen Leitern ein dritter Leiter 22 vorgesehen ist, der im Wechsel aus Abschnitten mit einem dünnen Querschnitt und einem dickeren Querschnitt besteht. Dieser Leiter kann durch Wegkratzen eines dünnen Abschnitts in beliebiger Höhe unterbrochen werden, z.B. in Höhe des gewünschten Wasserspiegels. Die Leiter können durch übliche Metallbeschichtung des Stabes aufgebracht sein. Sie können auf ihrer ganzen Länge oder aber nur im Bereich ihres unteren Endes aus einer Zinn-Kupfer-Legierung oder aber aus Kupfer mit einer Goldauflage oder sogar aus Platin bestehen um einer Korrosion entgegenzuwirken.

Auf dem oberen Ende des Rohres 16 ist ein flaches Gefäß 23 aufgesteckt, das einen Boden 24 und einen Deckel 25 aufweist. Der Boden 24 weist einen nach abwärts gerichteten am Rand einer Aussparung 46 angeordneten Stutzen 26 auf, mit dem das Gefäß 23 in das obere Ende des Rohres 16 unter Freilassung von Entlüftungsschlitzen eingesteckt und dort vorzugsweise abnehmbar befestigt ist. Der Boden 24 weist eine bordartigen nach oben stehenden Rand 27 und der Deckel 25 einen an seinem Rand abwärts ragende Randleiste 28 auf, an deren freien Ränder Boden 24 und Deckel 25 des flachen, in der Draufsicht runden Gefäßes ineinander gesteckt sind und durch Haftreibung aneinander befestigt sind. Zur besseren Befestigung können zusätzlich noch Rasten 29 im Boden 24 vorgesehen sein, deren oberes Ende mit einem Widerhaken versehen ist, der eine im Deckel 25 vorgesehene, nicht dargestellte Aufnahme hintergreift.

Im Innern des Gefäßes 23 befindet sich eine Leiste 30, an der der Stab 19 befestigt ist und die die Schaltelemente der Elektronik sowie zwei Leuchtdioden 31 und 32 trägt. Außerdem befinden sich in dem Gefäß Aufnahmen für zwei Batterien 33 als Stromquelle. Auch ist auf der Leiste 30 ein akustischer Signalgeber 34 befestigt, der durch eine Öffnung 35 im Deckel 25 nach oben hindurchtritt. Am Rande der Öffnung 35 ist ein Rohrabschnitt 36 angespritzt, der durch einen Stopfen 37 verschlossen ist, der den akustischen Signalgeber 34 mit Abstand umgibt. Der Stopfen 37 weist einen Deckelabschnitt 38 auf, an den ein Rohrabschnitt 39 angespritzt ist, dessen Außendurchmesser kleiner ist als der Innendurchmesser des Rohrabschnittes 36, so daß zwischen Rohrabschnitt 36 und Rohrabschnitt 39 ein durch Abstandshalter 40 unterteilter ringförmiger Kanal 41 entsteht, der in das Innere des Gefäßes 23 mündet. An der Innenfläche des Deckels 38 sind Abstandshalter 42 angespritzt, die nach dem Eindrücken des Stopfens 37 in den Rohrabschnitt 36 sich auf die obere Stirnfläche 43 es Rohrabschnittes 36 aufsetzen und somit einen Abstand der Innenfläche des Deckels 38 von der Ringstirnfläche 43 gewährleisten. Der Schall des Signalgebers kann daher durch den Kanal 41 und den Zwischenraum zwischen der Innenfläche des Deckels 38 der Ringstirnfläche 43 nach außen bringen. Der Deckel 38 übergreift die Ringstirnfläche 43 mit Abstand, so daß der Kanal 41 oben abgedeckt ist, damit beim Gießen kein Wasser in den Kanal 41 eindringen kann.

Zwei kleine Öffnungen 44 und 45 im Deckel 25 dienen zum Durchtritt der Leuchtdioden 31 und 32 nach außen.

Die Leiste 30 ist im Innern des Gefäßes 23 abnehmbar befestigt. Das Rohr 16 ist außermittig an dem Gefäß 23 befestigt.

Der pH-Wert kann durch Messung des elektrischen Widerstandes oder durch Messung einer bestimmten Ionenkonzentration mit einer für die betreffenden Ionen empfindlichen Elektrode (Glaselektroden) oder aber durch Farbreaktion mit bestimmten Reagenzien erfolgen. Im letzteren Fall kann das Gerät eine kleine Pumpe (Saugballon) zur Entnahme einer kleinen Flüssigkeitsmenge aufweisen und ein Gefäß in das diese entnommene Flüssigkeit eingeführt wird und in das eine bestimmte Menge Reagenz oder z.B. ein mit Reagenz getränkter Papierstreifen eingeführt wird.

**Ansprüche**

1. Gerät zur Anzeige von bei einer Hydrokultur interessierenden Werten, dadurch gekennzeichnet, daß das Gerät an seinem unteren Ende einen auf Flüssigkeit ansprechenden Sensor (4, 14), einen mit diesem verbundenen, eine elektronische Schaltung enthaltenden IC (Elektronik 12) und einen an diese Elektronik galvanisch oder drahtlos angeschlossenen optischen oder akustischen Zeichengeber (15) aufweist.

2. Gerät nach Anspruch 1, dadurch gekennzeichnet, daß die Elektronik (12) bei einem einstellbaren Widerstandswert zwischen den Elektroden (4, 14) ein Signal abgibt.

3. Gerät nach Anspruch 1 oder 2, dadurch gekennzeichnet, daß es rohrförmig ausgebildet ist, an seinem unteren Ende den auf Flüssigkeit ansprechenden Sensor (4, 14) und in einem Abstand von seinem unteren Ende einen zusätzlichen, auf Flüssigkeit ansprechenden Sensor aufweist.

4. Gerät nach Anspruch 3, dadurch gekennzeichnet, daß das Gerät einen Signalgeber aufweist, der von dem zusätzlichen Sensor gesteuert ist.

5. Gerät nach einem der vorhergehenden Ansprüche, dadurch gekennzeichnet, daß das Gerät ein Thermometer aufweist, das mit der Elektronik (12) verbunden ist und daß diese durch die Temperatur gesteuerte Signale abgibt.

6. Gerät nach Anspruch 5, dadurch gekennzeichnet, daß die Elektronik (12) einen Anschluß für eine Steuerleitung aufweist, die mit einer Heizung verbunden ist, die durch Signale der Elektronik gesteuert ist.

7. Gerät nach einem der vorhergehenden Ansprüche, dadurch gekennzeichnet, daß in ihm Vorrichtungen zur Stromversorgung der im Gerät enthaltenen Einrichtungen untergebracht sind.

8. Gerät nach einem der vorhergehenden Ansprüche, dadurch gekennzeichnet, daß das Gerät einen lichtempfindlichen Sensor und eine Vorrichtung aufweist, die einen gemittelten Wert der eingefallenen Lichtmenge, z.B. der vergangenen 12 oder 24 Stunden, anzeigt.

9. Gerät nach einem der vorhergehenden Ansprüche, dadurch gekennzeichnet, daß das Gerät an die Wand des Behälters angebaut oder in die Wand eingebaut ist.

10. Hydro-Kultur-Anlage mit mindestens einem, poröse für die Hydrokultur geeignete Körper enthaltenden Behälter, und einem Gerät nach einem der vorhergehenden Ansprüche, dadurch gekennzeichnet, daß Anzeigevorrichtungen für vom Gerät ermittelten Werte räumlich entfernt von dem Gerät angeordnet sind.

11. Gerät nach einem der vorhergehenden Ansprüche, dadurch gekennzeichnet, daß das Gerät ein abwärts gerichtetes Rohr (16) aufweist, an dessen oberem Ende ein Gefäß (23) angeordnet ist.

12. Gerät nach Anspruch 11, dadurch gekennzeichnet, daß in dem Gefäß (23) die Elektronik und Batterien (33) zur Stromversorgung angeordnet sind.

13. Gerät nach Anspruch 11 oder 12, dadurch gekennzeichnet, daß die Schaltelemente der Elektronik auf einer Leiste (30) angeordnet sind, die in dem Gefäß (23) herausnehmbar angeordnet ist.

14. Gerät nach einem der vorhergehenden Ansprüche, dadurch gekennzeichnet, daß der Deckel (25) des Gefäßes eine Öffnung (35) aufweist, durch die ein akustischer Signalgeber (34) nach oben ragt.

15. Gerät nach Anspruch 14, dadurch gekennzeichnet, daß die Öffnung (35) mit einer Haube abgedeckt ist und in der Haube Öffnungen zum Durchtritt des Schalles nach außen vorgesehen sind.

16. Gerät nach Anspruch 1, dadurch gekennzeichnet, daß es eine Vorrichtung zur Messung und/oder Anzeige des pH-Wertes aufweist.

Fig. 4

Fig. 1

Fig. 2

Fig. 3

Fig. 5

Fig. 6